(19) Europäisches Patentamt
European Patent Office
Office européen des brevets

(11) **EP 1 645 541 B1**

(12) **FASCICULE DE BREVET EUROPEEN**

(45) Date de publication et mention
de la délivrance du brevet:
**05.03.2008  Bulletin 2008/10**

(51) Int Cl.:
***C01B 3/38*** (2006.01)

(21) Numéro de dépôt: **05300804.1**

(22) Date de dépôt: **07.10.2005**

(54) **Dispositif et procédé de commande de quantités d'air, de vapeur d'eau et de carburant injectées dans un reformeur de système de pile à combustible embarqué sur un véhicule automobile**

Vorrichtung und Verfahren zur Steuerung der in einen Reformer eines Brenstoffzellensystems an Bord eines Fahrzeugs eingesprizten Mengen an Luft, Wasser- sowie Brennstoffsdampf

Device and process for the control of the quantities of air, steam and fuel vapor injected into a reformer of an on-board fuel cell system

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.10.2004  FR 0410700**

(43) Date de publication de la demande:
**12.04.2006  Bulletin 2006/15**

(73) Titulaire: **Renault**
**92109 Boulogne Billancourt (FR)**

(72) Inventeurs:
• **Bencherif, Karim**
**75019 Paris (FR)**
• **Devaud, Emmanuel**
**92140 Clamart (FR)**
• **Sorine, Michel**
**78500 Sartrouville (FR)**

(56) Documents cités:
**WO-A-20/04054013          US-A1- 2004 131 540**

**Description**

La présente invention concerne un dispositif et un procédé de commande de quantités d'air, de vapeur d'eau et de carburant injectées dans un reformeur de système de pile à combustible embarqué sur un véhicule automobile.

Les piles à combustible sont utilisées pour fournir de l'énergie soit pour des applications stationnaires, soit dans le domaine aéronautique ou automobile.

Les objectifs de pollution étant stricts, particulièrement pour le monoxyde de carbone et le dioxyde de carbone, le monoxyde de carbone étant de surcroît un poison pour une pile à combustible, il est indispensable de contrôler finement les émissions des éléments auxiliaires de la pile à combustible, dont fait partie le reformeur.

L'invention s'applique plus particulièrement aux reformeurs mettant en oeuvre un reformage autothermique.

L'invention a pour objet de déterminer avec précision les taux de rejet de gaz en sortie d'un reformeur de dispositif de pile à combustible, particulièrement du monoxyde de carbone CO et du dioxyde de carbone $CO_2$, et d'en déduire une commande des quantités de vapeur d'eau, d'air et de carburant à injecter pour alimenter le reformeur.

Selon l'invention, il est proposé un dispositif de commande de quantités d'air, de vapeur d'eau et de carburant injectées dans un reformeur de système de pile à combustible embarqué sur un véhicule automobile comprenant une unité de commande électronique. L'unité de commande électronique comprend un estimateur des taux de gaz en sortie du reformeur à partir de données d'entrée comprenant le débit d'alimentation en air, le débit d'alimentation vapeur d'eau, le débit d'alimentation en carburant, et la température d'entrée des gaz du reformeur, et des moyens de commande des quantités d'air, de vapeur d'eau et de carburant injectées dans le reformeur.

Par exemple, le reformeur comprend un étage de reformage autothermique.

Dans un mode de mise en oeuvre préféré, les données d'entrée de l'estimateur comprennent, en outre, la pression des gaz dans le reformeur.

Dans un mode de mise en oeuvre avantageux, l'estimateur est en outre adapté pour estimer la température de sortie des gaz du reformeur, lorsque le reformeur est adiabatique.

En outre, les données d'entrée de l'estimateur comprennent, en outre, les concentrations des gaz en sortie de reformeur mesurées par un capteur de concentrations, et les taux de gaz en sortie du reformeur estimés par l'estimateur.

Avantageusement, les données d'entrée de l'estimateur comprennent, en outre, la température des gaz en sortie de reformeur mesurée par un capteur de température, et la température de sortie des gaz du reformeur estimée par l'estimateur.

Selon un autre aspect de l'invention, il est également proposé un procédé de commande de quantités d'air, de vapeur d'eau et de carburant injectées dans un reformeur de système de pile à combustible embarqué sur un véhicule automobile. On estime tout d'abord des taux de gaz en sortie du reformeur à partir de données d'entrée comprenant le débit d'alimentation en air, le débit d'alimentation en vapeur d'eau, le débit d'alimentation en carburant, et la température d'entrée des gaz du reformeur. Puis on commande des quantités d'air, de vapeur d'eau et de carburant injectées dans le reformeur en fonction des taux de gaz estimés.

Dans un mode de mise en oeuvre préféré, on utilise, en outre, des données de sortie de l'estimateur comme données d'entrée de l'estimateur.

Avantageusement, on utilise des données mesurées par capteur en entrée de l'estimateur correspondant auxdites données de sortie estimées utilisées comme données d'entrée.

D'autres buts, caractéristiques et avantages de l'invention apparaîtront à la lecture de la description suivante, de quelques exemples nullement limitatifs, et faite en référence aux dessins annexés sur lesquels :

- la figure 1 est un schéma synoptique d'un dispositif selon l'invention ;
- la figure 2 est un schéma illustrant une mise en oeuvre du procédé selon l' invention ;
- la figure 3 est un schéma synoptique illustrant un premier mode de réalisation d'un estimateur d'un dispositif selon l'invention.
- la figure 4 est un schéma synoptique illustrant un second mode de réalisation d'un estimateur d'un dispositif selon l'invention.
- la figure 5 est un schéma synoptique illustrant un troisième mode de réalisation d'un estimateur d'un dispositif selon l'invention.
- la figure 6 est un diagramme illustrant un dispositif selon l'invention.

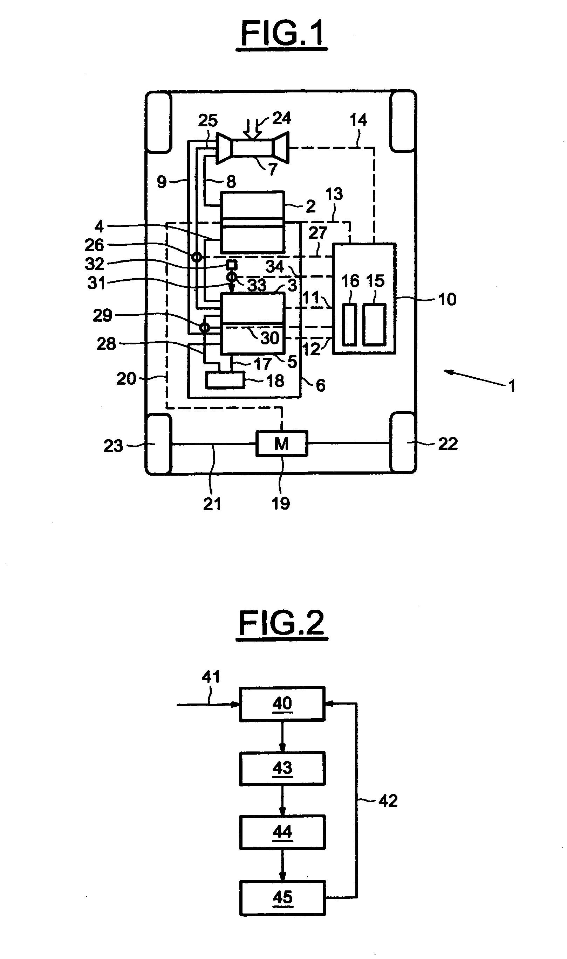

La figure 1 représente un dispositif selon l'invention, embarqué dans un véhicule automobile 1. Le dispositif comprend une pile à combustible 2, un reformeur 3 pour alimenter en hydrogène la pile à combustible 2 par un conduit 4, ledit reformeur 3 étant associé à un brûleur catalytique 5 permettant de chauffer l'ensemble du dispositif, lors de la phase de démarrage, ainsi que de réguler la température lors du fonctionnement nominal. Le brûleur 5 apporte également l'énergie nécessaire à la réaction de reformage et permet d'oxyder le monoxyde de carbone CO quand il utilise un retour, par un conduit 6, des gaz de sortie de l'anode de la pile à combustible 2.

Le dispositif comprend également un groupe de compression d'air 7, qui alimente en oxygène, généralement sous forme d'air comprimé, la pile à combustible 2, et le brûleur 5, respectivement par des conduits 8 et 9. Le dispositif comprend en outre une unité de commande électronique UCE 10, utilisée également pour d'autres buts tels que le contrôle de stabilité du véhicule ou du freinage, connectée au reformeur 3, au brûleur 5, à la pile à combustible 2 et au groupe de compression d'air 7 respectivement par des connexions 11, 12, 13 et 14. L'unité de commande électronique 10 comprend un estimateur 15 des taux de gaz en sortie du reformeur 3, et éventuellement de leur température dans le cas d'un reformeur adiabatique, et des moyens de commande 16 des quantités d'air, de vapeur d'eau et de carburant injectées dans le reformeur 3.

Le brûleur 5 est alimenté en carburant par un conduit 17 relié à un réservoir de carburant 18. La pile à combustible 2 alimente un moteur électrique 19 par une connexion 20. Le moteur électrique 19 entraîne en rotation l'axe 21 des roues 22 et 23. Le groupe de compression d'air 7 est alimenté en air par une alimentation en air 24.

Le reformeur 3 est alimenté en air par le groupe de compression d'air 7 au moyen d'un conduit 25 comprenant une vanne commandée 26 reliée à l'unité de commande électronique 10 par une connexion 27. L'alimentation en carburant du reformeur 3 est effectuée par un conduit 28 reliant le réservoir de carburant 18 et le reformeur 3, le conduit 28 comprenant une vanne commandée 29 reliée à l'unité de commande électronique 10 par une connexion 30. Le reformeur 3 est alimenté en vapeur d'eau par un conduit 31 rélié à un réservoir d'eau 32 équipé pour fournir de la vapeur d'eau, et comprenant une vanne commandée 33 reliée à l'unité de commande électronique 10 par une connexion 34.

Lors d'une étape 40, les moyens de commande 16 des quantités d'air, de vapeur d'eau et de carburant injectées dans le reformeur 3 optimisent la consommation en carburant du reformeur 3 ainsi que le taux de monoxyde de carbone $CO$ et de dioxyde de carbone $CO_2$ en sortie du reformeur 3, par un algorithme connu de l'homme du métier. Les moyens de commande 16 effectuent cette minimisation à partir des valeurs du taux prédéterminé de monoxyde de carbone et du débit de dihydrogène souhaitées en sortie du reformeur 3, amenées à l'entrée 41 de l'étape 40 et de l'estimation des taux de monoxyde et dioxyde de carbone en sortie du reformeur 3, effectuée par l'estimateur 15 et ramenée par la branche de retour 42 à l'étape 40. La valeur du taux prédéterminé de monoxyde de carbone souhaité en sortie du reformeur, qui dépend des normes de pollution en vigueur et du fonctionnement dans lequel se trouve le reformeur, est stockée en mémoire dans l'unité de commande électronique 10. Après avoir effectué cette optimisation et déduit des débits optimisés d'air, de vapeur d'eau et de carburant à injecter dans le reformeur 3, les moyens de commande 16 commandent de nouveaux débits d'injection d'air, de vapeur d'eau et de carburant de valeurs égales aux débits optimisés d'air, de vapeur d'eau et de carburant, dans le reformeur 3, lors d'une étape 43. Puis, lors d'une étape 44, l'unité de commande électronique 10 effectue de nouvelles mesures au niveau du reformeur, au moyen de capteurs non représentés sur les schémas, et de nouveaux calculs. Enfin, lors d'une étape 45, l'estimateur 15 des taux de gaz en sortie du reformeur 3 fournit aux moyens de commande 16 une estimation du taux de gaz rejetés par le reformeur 3. On a donc un fonctionnement par bouclage.

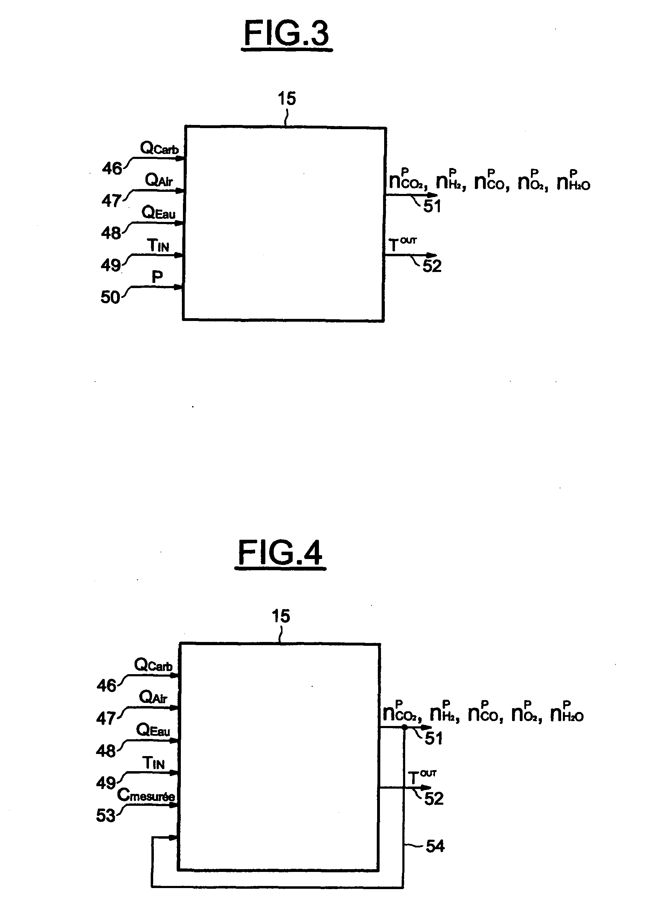

La figure 3 illustre un mode réalisation d'un estimateur 15 selon l'invention. Les données d'entrée de l'estimateur comprennent le débit $Q_{Carb}$ d'alimentation en carburant du reformeur 3 fourni par une entrée 46, le débit $Q_{Air}$ d'alimentation en air du reformeur 3 fourni par une entrée 47, le débit $Q_{eau}$ d'alimentation en vapeur d'eau du reformeur 3 fourni par une entrée 48, la température $T_{IN}$ des gaz en entrée du reformeur 3 fournie par une entrée 49, et la pression $P$ dans le reformeur 3 fournie par une entrée 50.

En sortie de l'estimateur 15, les estimations des taux de gaz de sortie du reformeur 3 sont fournies par une sortie 51 aux moyens de commande 16, ainsi que l'estimation de la température $T^{OUT}$ par une sortie 52.

L'estimateur 15 est basé sur ce qui suit.

Le reformage autothermique (Auto Thermal Reforming ou ATR en langue anglaise), combine les deux réactions suivantes, de manière à annuler l'enthalpie de la réaction globale :

$$\begin{cases} C_\alpha H_\beta + \dfrac{\alpha}{2}\left(O_2 + \psi N_2\right) \rightarrow \alpha\,CO + \dfrac{\beta}{2}H_2 + \left(\dfrac{\alpha\psi}{2}\right)N_2 & \Delta H < 0 \\[3mm] C_\alpha H_\beta + \alpha\,H_2O \rightarrow \alpha\,CO + \left(\dfrac{\beta}{2} + \alpha\right)H_2 & \Delta H > 0 \end{cases}$$

Avec le procédé de reformage autothermique, l'eau et l'hydrogène non consommés par la pile à combustible 2 peuvent être valorisés. Cette technologie est intéressante lors de l'utilisation de carburants pétroliers liquides. En outre, la présence d'air et d'eau permet une grande souplesse d'utilisation. En effet, lors des étapes de démarrage du reformeur 3, il sera possible de moduler la quantité d'air à injecter dans le reformeur 3, et ainsi diminuer le temps de démarrage.

Les réactifs au niveau du reformage autothermique sont l'air, le carburant et l'eau. L'air peut être considéré comme $O_2 + \psi N_2$ avec $\psi=3,773$. La masse d'air par mole d'oxygène est alors $m_{air} = M_{O_2} + \psi M_{N_2} = 138,25g$, et sa masse molaire est

$$M_{air} = \frac{m_{air}}{1+\psi} = 28,96\,g/mol\,.$$

La masse molaire de l'eau est $M_{H_2O}=18g/mol$.

Le carburant est un alcane $C_nH_{2n+2}$ ou un mélange d'alcanes, ce qui donne un carburant de formule moyenne $C_\alpha H_\beta$ avec $\alpha$ et $\beta$ réels. On note $\dfrac{\beta}{\alpha}$ , et le carburant peut se noter également $(Ch_y)_\alpha$ , de masse molaire $M_{carb}=\alpha(12+y)$.

Le reformage autothermique peut alors s'écrire dans les conditions stoechiométriques :

$$\left(CH_y\right)_\alpha + \frac{\alpha}{4}\left(O_2 + \psi N_2\right) + \frac{\alpha}{2}H_2O \rightarrow \alpha CO + \left(\frac{\alpha(y+1)}{2}\right)H_2 + \left(\frac{\alpha\psi}{4}\right)N_2$$

On a alors les rapports massiques suivants :

$$\begin{cases} \lambda_{st(air)} = \left(\dfrac{\text{masse air}}{\text{masse carburant}}\right)_{st} = \dfrac{m_{air}}{4(12+y)} \\[4mm] \lambda_{st(eau)} = \left(\dfrac{\text{masse eau}}{\text{masse carburant}}\right)_{st} = \dfrac{m_{eau}}{2(12+y)} \end{cases}$$

dans lesquels l'indice st signifie stoechiométrique, $m_{air}$ la masse d'air par mole d'oxygène, en grammes, et $m_{eau}$ la masse d'eau $H_2O$ par mole d'oxygène, en grammes.

Il est possible de décrire la réaction avec deux autres rapports, qui sont le rapport des débits molaires d'eau et de carburant en entrée du reformeur, et le rapport des débits molaires d'oxygène et de carburant en entrée du reformeur.

Contrairement à la combustion, pour laquelle on définit un rapport entre le carburant et l'air, on a les deux rapports mentionnés, et donc un degré de liberté de plus.

On définit alors les richesses du mélange $\Phi_{Air}$, $\Phi_{Eau}$ par :

$$\begin{cases} \Phi_{Air} = \lambda_{st(Air)} \cdot \left(\dfrac{\text{masse carburant}}{\text{masse air}}\right) \\[6mm] \Phi_{Eau} = \lambda_{st(Eau)} \cdot \left(\dfrac{\text{masse carburant}}{\text{masse eau}}\right) \end{cases}$$

Pour un mélange défini par ces deux richesses, les réactifs R sont :

$$R = (CH_y)_\alpha + \frac{\lambda_{st(Air)}M_{Carb}}{\Phi_{Air}\,m_{air}}O_2 + \frac{\lambda_{st(Air)}M_{Carb}}{\Phi_{Air}\,m_{air}}\psi N_2 + \frac{\lambda_{st(Eau)}M_{Carb}}{\Phi_{Eau}\,m_{eau}}H_2O$$

et les produits P sont :

$$P = n_{co_2}CO_2 + n_{co}CO + n_{H_2O}H_2O + n_{H_2}H_2 + n_{o_2}O_2 + n_{N_2}N_2$$

dans laquelle $n_x$ correspond au nombre de moles de produit X obtenu pour une mole de carburant.

Il peut également se produire d'autres réactions qui sont :

$$\begin{cases} CO + H_2O \leftrightarrow CO_2 + H_2 \\ CO + 3H_2 \rightarrow CH_4 + H_2O \\ C + H_2O \rightarrow CO + H_2 \\ 2CO \rightarrow C + CO_2 \\ CH_4 + O_2 \rightarrow CO + H_2 \\ H_2 + \dfrac{1}{2}O_2 \rightarrow H_2O \\ C + O_2 \rightarrow CO_2 \end{cases}$$

On peut alors écrire, pour les réactifs R et les produits P :

$$\begin{cases} R = \left(CH_y\right)_\alpha + \dfrac{\lambda_{st(Air)}M_{Carb}}{\Phi_{Air}\, m_{air}}O_2 + \dfrac{\lambda_{st(Air)}M_{Carb}}{\Phi_{Air}\, m_{air}}\psi N_2 + \dfrac{\lambda_{st(Eau)}M_{Carb}}{\Phi_{Eau}\, m_{eau}}H_2O + B_R \\ P = n_{O_2}^P\, O_2 + n_{H_2O}^P\, H_2O + B_P \end{cases}$$

avec :

$$B_x = n_{co}^X\, CO + n_{co2}^X\, CO_2 + n_{H_2}^X\, H_2 + n_{N2}^x\, N_2 \quad (X = R\ ou\ P)$$

en posant :

$$Z_1 = \frac{\lambda_{st(Air)}M_{Carb}}{\Phi_{Air}\, m_{air}} \quad et \quad Z_2 = \frac{\lambda_{st(Air)}M_{Carb}}{\Phi_{Air}\, m_{eau}}$$

la réaction globale s'écrit :

$$(CH_y)_\alpha + Z_1 O_2 + Z_1 \psi N_2 + Z_2 H_2O + B_R \rightarrow n_{o2}^P O_2 + n_{H_2O}^P H_2O + B_P$$

Un bilan de conservation de la matière donne le système suivant :

$$\begin{pmatrix} Z_2 + 2Z_1 \\ y\alpha + 2Z_2 + n_{H_2}^R \\ \alpha + n_{co}^R + n_{co_2}^R \end{pmatrix} = \begin{pmatrix} 2 & 1 & 2 & 1 & 0 \\ 0 & 0 & 0 & 2 & 2 \\ 0 & 1 & 1 & 0 & 0 \end{pmatrix} \begin{pmatrix} n_{O_2}^P \\ n_{CO_2}^P \\ n_{CO}^P \\ n_{H_2O}^P \\ n_{H_2}^P \end{pmatrix}$$

Ce système d'équations est mis sous la forme : $B = A.n^P$

Avec

$$n^P = \left( n_{O_2}^P, n_{CO_2}^P, n_{CO}^P, n_{H_2O}^P, n_{O_2}^P \right)$$

On cherche le vecteur $n^P$ qui minimise l'énergie de Gibbs G, c' est-à-dire :

$$\min_{n^P} G = \sum_{i=1}^{NS} \left[ \mu_i \, n_i^P \right] = \min_{n^P} \left( \mu^t n^P \right)$$

où NS est le nombre de composés présents dans le reformeur, dans cet exemple NS=5 ($O_2$, $CO_2$, CO, $H_2O$, et $H_2$) et $\mu^t$ est un vecteur dont les composantes sont les potentiels chimiques des espèces ($\mu_i$).

Il faut donc minimiser l'énergie de Gibbs G sous la contrainte $B=A.n^P$

On forme alors l'hamiltonien H :

$$\begin{cases} \min_{n^P} \left( \mu^t n^P \right) \\ An^P = B \text{ et } n_i^P \geq 0 \end{cases} \Rightarrow \min_{n^P} \left( H = \mu^t n^P + \lambda \left[ A.n^P - B \right] \right)$$

avec $\lambda$ est un vecteur des facteurs multiplicatifs de Lagrange

Les potentiels chimiques sont mis sous la forme :

$$\mu_j = \mu_j^0 + RT \, \ln \left( \frac{n_j^P}{\sum_{i=1}^{NS} n_i^P} \right) + RT \ln(P)$$

où :

P est la pression dans le reformeur, en Pa ;

T est la température dans le reformeur, en K ;

$\mu_j^0$ est le potentiel standard de l'espèce j dans les conditions standard de température et de pression ; et

R est la constante des gaz parfaits.

On pose alors :

$$\begin{cases} B_1 = Z_2 + 2Z_1 + n_{CO}^R + 2n_{CO_2}^R \\[2mm] B_2 = \dfrac{y\,\alpha + 2Z_2 + 2n_{H_2}^R}{2} \\[2mm] B_3 = \alpha + n_{CO}^R + n_{CO_2}^R \\[2mm] E = B_1 - B_2 - 2B_3 \end{cases}$$

Un bilan atomique se réduit alors à une équation à trois inconnues, et on passe d'une dimension 5 à une dimension 3. Cela définit la contrainte d'optimisation de l'hamiltonien H :

$$F\left(n_{O_2}^P, n_{H_2}^P, n_{CO}^P\right) = 2\,n_{O_2}^P - n_{CO}^P - n_{H_2}^P - E = 0$$

On applique alors :

$$n_{H_2O}^P = B_2 - n_{H_2}^P$$

$$n_{CO_2}^P = B_3 - n_{CO}^P$$

et on pose $D = B_2 + B_3$ pour obtenir : $\displaystyle\sum n_i^P = D + n_{O_2}^P$  L'énergie de Gibbs s'écrit alors sous la forme :

$$G\left(n_{O_2}^P, n_{H_2}^P, n_{CO}^P\right) = \begin{cases} n_{O_2}^P\left(\mu_{O_2}^0 + RT\ln(P) + RT\ln\left(\dfrac{n_{O_2}^P}{D + n_{O_2}^P}\right)\right) + \ldots \\[4mm] \ldots n_{H_2}^P\left(\mu_{H_2}^0 + RT\ln(P) + RT\ln\left(\dfrac{n_{H_2}^P}{D + n_{O_2}^P}\right)\right) + \ldots \\[4mm] \ldots \left(B_2 - n_{H_2}^P\right)\left(\mu_{H_2O}^0 + RT\ln(P) + RT\ln\left(\dfrac{B_2 - n_{H_2}^P}{D + n_{O_2}^P}\right)\right) + \ldots \\[4mm] \ldots n_{CO}^P\left(\mu_{CO}^0 + RT\ln(P) + RT\ln\left(\dfrac{n_{CO}^P}{D + n_{O_2}^P}\right)\right) + \ldots \\[4mm] \ldots \left(B_3 - n_{CO}^P\right)\left(\mu_{CO_2}^0 + RT\ln(P) + RT\ln\left(\dfrac{B_3 - n_{CO}^P}{D + n_{O_2}^P}\right)\right) \end{cases}$$

et on a alors l' hamiltonien H :

$$H\left(n_{O_2}^P, n_{H_2}^P, n_{CO}^P\right) = G\left(n_{O_2}^P, n_{H_2}^P, n_{CO}^P\right) + \lambda F\left(n_{O_2}^P, n_{H_2}^P, n_{CO}^P\right)$$

On pose alors :

$$
\begin{cases}
k_{O_2} = \exp\left(\dfrac{-\mu_{O_2}^0}{RT}\right) \\[2em]
k_H = \exp\left(\dfrac{-\mu_{H_2}^0 + \mu_{H_2O}^0}{RT}\right) \\[2em]
k_C = \exp\left(\dfrac{-\mu_{CO}^0 + \mu_{CO_2}^0}{RT}\right)
\end{cases}
$$

et on dérive l'hamiltonien H par rapport à ces variables, et on obtient :

$$
\begin{cases}
n_{O_2}^P = \dfrac{x^{-2}k_{O_2}D}{P - x^{-2}k_{O_2}} \\[1.5em]
n_{H_2}^P = \dfrac{k_H x B_2}{1 + x B_2} \\[1.5em]
n_{CO}^P = \dfrac{k_C x B_3}{1 + x B_3} \\[1.5em]
a_4 x^4 + a_3 x^3 + a_2 x^2 + a_1 x + a_0 = 0
\end{cases}
$$

avec :

$$
\begin{cases}
a_4 = P k_H k_C (B_1 - B_3) \\[0.5em]
a_3 = P(k_c(B_1 - B_2 - B_3) + k_H(B_1 - 2B_3)) \\[0.5em]
a_2 = P(B_1 - B_2 - 2B_3) - k_H k_O k_C (B_3 + B_1 + 2B_2) \\[0.5em]
a_1 = -k_O k_C (B_1 + B_2 + B_3) - k_H k_O (2B_2 + B_1) \\[0.5em]
a_0 = -k_O (B_1 + B_2)
\end{cases}
$$

La résolution de ce système permet de déterminer la composition des gaz en sortie du reformeur 3.

Si le reformeur 3 est en outre adiabatique, il est possible de déterminer la température de sortie en utilisant la relation :

$$
\sum n_i^R \Delta H_i(T_{IN}) - Q = \sum n_i^P \Delta H_i(T^{OUT})
$$

dans laquelle :

Q représente les pertes thermiques au niveau du reformeur, en W, or le reformeur 3 est adiabatique, donc Q=0 ;
$\Delta H_i(T)$ est l'entalpie de formation de l'espèce i à la température T, en J/mol ; et

$n_i^R, n_i^P$ sont respectivement les quantités de matière de l'espèce i en entrée et en sortie du reformeur, en mol/s.

La figure 4 décrit une variante de réalisation de l'estimateur 15 selon l'invention. Par rapport à la figure 3, l'estimateur 15 ne reçoit plus en entrée la pression P, mais reçoit, par une connexion 53 des mesures $C_{mesuree}$ des concentrations en sortie du reformeur 3 mesurées par des capteurs de concentrations. L'estimateur 15 reçoit en outre les estimations des taux de gaz de sortie du reformeur 3 par une connexion 54.

Dans le reformeur 3, la réaction de gaz à l'eau est lente par rapport aux autres réactions, elle n'intervient que dans une seconde étape. Disposant d'un modèle du taux de réaction, et considérant le vecteur des concentrations des espèces mesurées par ces capteurs :

$$X = {}^t\left[C_{CO} ; C_{CO_2} ; C_{H_2} ; C_{H_2O}\right]$$

on obtient :

$$\begin{cases} \dfrac{dX}{dt} = R(X,T,n^P) \\ Y = CX \end{cases}$$

où R est le taux de réaction, Y représente un vecteur de mesure, et C représente un vecteur dont chaque composante vaut 0 ou 1 en fonction de l'existence ou non d'un capteur de mesure de la concentration de l'espèce associée. Par exemple, si on ne dispose que d'un capteur de dihydrogène $H_2$, alors, pour le vecteur $X = {}^t[C_{CO} ; C_{CO_2} ; C_{H_2} ; C_{H_2O}]$, on a C = [0;0;1;0], et la mesure sera Y $[C_{H_2}]$.

Le taux de réaction R fixe la dynamique de la réaction en décrivant une cinétique chimique et en utilisant comme entrée les concentrations des espèces C, la température T, et l'ensemble $n^P$ des taux des espèces en sortie du reformeur 3.

On construit alors un vecteur $\hat{X}$ d'estimation du vecteur X de la manière suivante :

$$\begin{cases} \dfrac{d\hat{X}}{dt} = R\left(\hat{X},T,n^P\right) + K\left(Y - \hat{Y}\right) \\ \hat{Y} = C\hat{X} \end{cases}$$

où K est une matrice ou une fonction non linéaire de son argument choisie de façon à assurer la convergence de l'erreur $e = X - \hat{X}$, entre le système réel et l'estimation, vérifiant l' équation :

$$\frac{de}{dt} = R\left(X,T,n^P\right) - R\left(\hat{X},T,n^P\right) - KCe.$$

Lorsque l'erreur e converge vers 0, $\hat{X}$ converge vers X. Cette estimation permet de calculer encore plus précisément les concentrations en sortie du reformeur 3.

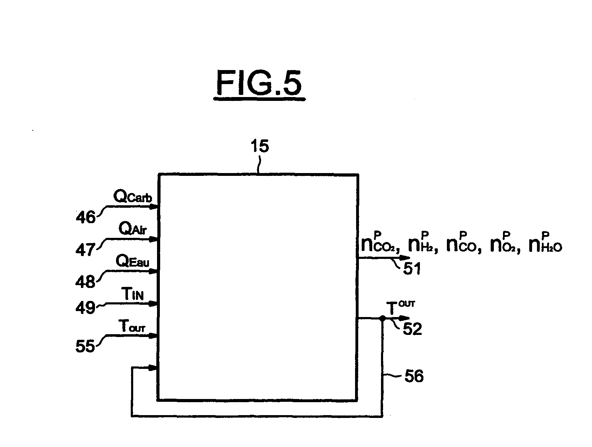

La figure 5 décrit une variante de réalisation de l'estimateur 15 selon l'invention. Par rapport à la figure 3, l'estimateur 15 ne reçoit plus en entrée la pression P, mais reçoit, par une connexion 55 une mesure $T^{OUT}$ de la température en sortie du reformeur 3 mesurée par un capteur de température. L'estimateur 15 reçoit en outre l'estimation de la température de sortie des gaz du reformeur 3 par une connexion 56.

Disposant d'un modèle tenant compte de la température, on a l'équation suivante:

$$\frac{dT^{OUT}}{dt} = -A(t)\,(T^{OUT} - T_{IN}) + B(T^{OUT}, n^P, T_{IN}, n^R)$$

dans laquelle A(t) et B(t) correspondent respectivement à la partie transport de matière et à la partie réaction chimique.

On augmente alors la taille du vecteur d'état $X^{aug} = {}^t[X T^{OUT}]$, et on obtient :

$$\begin{cases} \dfrac{dX^{aug}}{dt} = R^{aug}(X^{aug}, n^P, T_{IN}, n^R) \\ Y = C^{aug}.X^{aug} \end{cases}$$

On a $R^{aug}(X^{aug}, n^P, T_{IN}, n^R)$ est défini par :

$$\begin{cases} R(X, T, n^P) \\ -A(t)(T^{OUT} - T_{IN}) + B(T^{OUT}, n^P, T_{IN}, n^R) \end{cases}$$

et le vecteur Y représente un vecteur de mesure. Dans ce cas, le vecteur $C^{aug}$ est donné par $C^{aug} = {}^t[0,0,0,0,0,1]$, et $Y = T^{OUT}$ mesurée par un thermocouple.
On a alors un estimateur régi par :

$$\begin{cases} \dfrac{d\hat{X}^{aug}}{dt} = R^{aug}(\hat{X}^{aug}, n^P, T_{IN}, n^R) + K(Y - \hat{Y}) \\ \hat{Y} = C^{aug}, \hat{X}^{aug} \end{cases}$$

et l'erreur $e = X^{aug} - \hat{X}^{aug}$ entre le système réel et l'estimation vérifie l'équation :

$$\frac{de}{dt} = R^{aug}(X^{aug}, n^P, T_{IN}, n^R) - R^{aug}(\hat{X}^{aug}, n^P, T_{IN}, n^R) - K.C.e$$

K est une matrice choisie de manière à assurer la convergence de l'estimation, et peut être remplacée par une fonction non linéaire de son argument. Lorsque l'erreur e converge vers 0, $\hat{X}^{aug}$ converge vers $X^{aug}$.

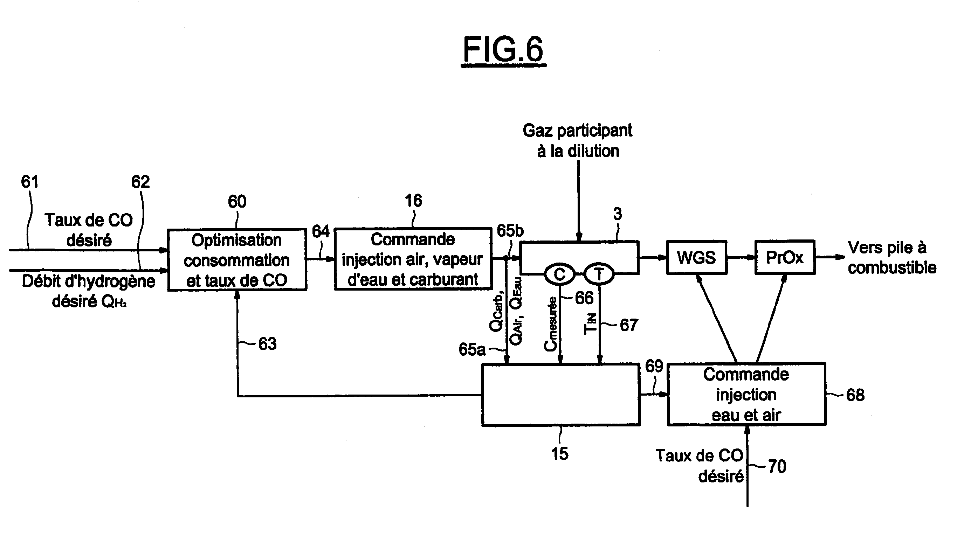

La figure 6 décrit un dispositif de commande selon un aspect de l'invention.

Un module d'optimisation 60 reçoit par une entrée 61 le taux $n_{CO}^P$ de monoxyde de carbone CO désiré en sortie du reformeur 3 auto thermique, ainsi que le débit de dihydrogène $H_2$ souhaité en sortie du reformeur 3. Le module d'optimisation 60 reçoit par une connexion 63 le résultat de l'estimation effectuée par l'estimateur 15. Au moyen d'un algorithme connu de l'homme du métier, il optimise la consommation de carburant en vue d'obtenir un tel débit de dihydrogène tout en respectant le taux de monoxyde de carbone CO souhaité.
Le résultat de cette optimisation est transmis par une connexion 64 au module de commande 16, qui va alors commander l'injection de vapeur d'eau, d'air et de carburant dans le reformeur 3, par une connexion 65b, et transmettre cette commande de débits d'alimentation à l'estimateur 15 par une connexion 65a. Un ensemble C de capteurs de concentration, mesure les concentrations en sortie du reformeur 3, et les transmet à l'estimateur 15 par une connexion 66.
Un capteur de température T mesure la température $T_{IN}$ en entrée du reformeur 3, et la transmet à l'estimateur 15 par une connexion 67. Il s'agit du second mode décrit de réalisation de l'estimateur 15, mais tout autre mode de réalisation est également adapté à ce système. Les gaz de sortie du reformeur sont ensuite désulfurés dans un module de désulfuration WGS, puis oxydés par oxydation préférentielle dans un module d'oxydation préférentielle PrOx ( CO + ½ $O_2 \rightarrow CO_2$ ). Un module de commande 68 d'injection d'air et de vapeur d'eau dans le module de désulfuration WGS et dans le module d'oxydation préférentielle PrOx peut également utiliser les données fournies par l'estimateur 3, par une connexion 69, ainsi que le taux de monoxyde de carbone CO désiré fourni par une connexion 70.
L'invention permet d'estimer la composition des gaz de sortie d'un reformeur de système de pile à combustible, et d'utiliser cette estimation pour commander l'injection de vapeur d'eau, d'air et de carburant dans le reformeur.

**EP 1 645 541 B1**

**Revendications**

1. Dispositif de commande de quantités d'air, de vapeur d'eau et de carburant injectées dans un reformeur (3) de système de pile à combustible embarqué sur un véhicule automobile (1) comprenant une unité de commande électronique (10), **caractérisé en ce que** l'unité de commande électronique (10) comprend un estimateur (15) des taux de gaz en sortie du reformeur (3) à partir de données d'entrée comprenant le débit d'alimentation en air ($Q_{Air}$), le débit d'alimentation en vapeur d'eau ($Q_{Eau}$), le débit d' alimentation en carburant ($Q_{Carb}$), et la température d'entrée ($T_{IN}$) des gaz du reformeur, et des moyens de commande (16) des quantités d'air, de vapeur d'eau et de carburant injectées dans le reformeur (3).

2. Dispositif selon la revendication 1, **caractérisé en ce que** le reformeur (3) comprend un étage de reformage autothermique.

3. Dispositif selon la revendication 2, **caractérisé en ce que** les données d'entrée de l'estimateur (3) comprennent, en outre, la pression (P) des gaz dans le reformeur.

4. Dispositif selon la revendication 2, **caractérisé en ce que** l'estimateur (3) est en outre adapté pour estimer la température de sortie ($T^{OUT}$) des gaz du reformeur (3), lorsque le reformeur (3) est adiabatique.

5. Dispositif selon la revendication 2 ou 4, **caractérisé en ce que** les données d'entrée de l'estimateur (15) comprennent, en outre, les concentrations ($C_{mesurée}$) des gaz en sortie de reformeur (3), mesurées par un capteur de concentrations, et les taux de gaz en sortie du reformeur (3) estimés par l'estimateur (15).

6. Dispositif selon la revendication 4, **caractérisé en ce que** les données d'entrée de l'estimateur (15) comprennent, en outre, la température ($T_{OUT}$) des gaz en sortie de reformeur (3) mesurée par un capteur de température, et la température de sortie ($T^{OUT}$) des gaz du reformeur (3) estimée par l'estimateur (15).

7. Procédé de commande de quantités d'air, de vapeur d'eau et de carburant injectées dans un reformeur (3) de système de pile à combustible embarqué sur un véhicule automobile (1), **caractérisé en ce que** l'on estime des taux de gaz en sortie du reformeur (3) à partir de données d'entrée comprenant le débit d'alimentation en air ($Q_{Air}$), le débit d'alimentation en vapeur d'eau ($Q_{Eau}$), le débit d'alimentation en carburant ($Q_{Carb}$), et la température d'entrée ($T_{IN}$) des gaz du reformeur (3), et on commande des quantités d'air, de vapeur d'eau et de carburant injectées dans le reformeur (3) en fonction des taux de gaz estimés.

8. Procédé selon la revendication 7, **caractérisé en ce qu'**on utilise, en outre, des données de sortie de l'estimateur (15) comme données d'entrée de l'estimateur (15).

9. Procédé selon la revendication 8, **caractérisé en ce qu'**en outre, on utilise des données mesurées par capteur en entrée de l'estimateur (15) correspondant auxdites données de sortie estimées utilisées comme données d'entrée.

**Claims**

1. Device for controlling quantities of air, water vapour and fuel injected into a reformer (3) of a fuel cell system mounted on a motor vehicle (1), comprising an electronic control unit (10), **characterized in that** the electronic control unit (10) comprises an estimator (15) of the gas contents leaving the reformer (3) from input data comprising the air feed rate ($Q_{Air}$), the water vapour feed rate ($Q_{Eau}$), the fuel feed rate ($Q_{Carb}$) , and the inlet temperature ($T_{IN}$) of the reformer gases, and means (16) for controlling the quantities of air, water vapour and fuel injected into the reformer (3).

2. Device according to Claim 1, **characterized in that** the reformer (3) comprises an auto thermal reforming stage.

3. Device according to Claim 2, **characterized in that** the estimator (3) input data further comprise the pressure (P) of the gases in the reformer.

4. Device according to Claim 2, **characterized in that** the estimator (3) is further suitable for estimating the outlet temperature ($T^{OUT}$) of the gases from the reformer (3), when the reformer (3) is adiabatic.

5. Device according to either of Claims 2 and 4, **characterized in that** the input data of the estimator (15) further

**11**

comprise the concentrations ($C_{measured}$) of the gases leaving the reformer (3), measured by a concentration sensor, and the gas contents leaving the reformer (3) estimated by the estimator (15).

6. Device according to Claim 4, **characterized in that** the input data of the estimator (15) further comprise the temperature ($T_{OUT}$) of the gases leaving the reformer (3) measured by a temperature sensor, and the outlet temperature ($T^{OUT}$) of the gases from the reformer (3) estimated by the estimator (15).

7. Method for controlling quantities of air, water vapour and fuel injected into a reformer (3) of a fuel cell system mounted on a motor vehicle (1), **characterized in that** the gas contents leaving the reformer (3) are estimated from input data comprising the air feed rate ($Q_{Air}$), the water vapour feed rate ($Q_{Eau}$), the fuel feed rate ($Q_{Carb}$), and the inlet temperature ($T_{IN}$) of the reformer gases (3), and quantities of air, water vapour and fuel injected into the reformer (3) are controlled as a function of the estimated gas contents.

8. Method according to Claim 7, **characterized in that** output data of the estimator (15) are also used as input data of the estimator (15).

9. Method according to Claim 8, **characterized in that** data measured by sensor at the estimator inlet (15) corresponding to the said estimated output data are also used as input data.

## Patentansprüche

1. Vorrichtung zur Steuerung von Luft-, Wasserdampf- und Kraftstoffmengen, die in einen Reformer (3) eines an Bord eines Kraftfahrzeugs (1) befindlichen Brennstoffzellensystems eingespritzt werden, die eine elektronische Steuereinheit (10) aufweist, **dadurch gekennzeichnet, dass** die elektronische Steuereinheit (10) einen Schätzer (15) der Gasgehalte am Ausgang des Reformers (3) ausgehend von Eingangsdaten, die die Luft-Zulaufmenge ($Q_{Luft}$), die Wasserdampf-Zulaufmenge ($Q_{Wasser}$), die Kraftstoff-Zulaufmenge ($Q_{Kraft}$) und die Eingangstemperatur ($T_{IN}$) der Gase des Reformers umfassen, und Mittel zur Steuerung (16) der Luft-, Wasserdampf- und Kraftstoffmengen aufweist, die in den Reformer (3) eingespritzt werden.

2. Vorrichtung nach Anspruch 1, **dadurch gekennzeichnet, dass** der Reformer (3) eine Stufe der autothermen Reformierung aufweist.

3. Vorrichtung nach Anspruch 2, **dadurch gekennzeichnet, dass** die Eingangsdaten des Schätzers (3) außerdem den Druck (P) der Gase im Reformer aufweisen.

4. Vorrichtung nach Anspruch 2, **dadurch gekennzeichnet, dass** der Schätzer (3) außerdem geeignet ist, um die Ausgangstemperatur ($T^{OUT}$) der Gase des Reformers (3) zu schätzen, wenn der Reformer (3) adiabatisch ist.

5. Vorrichtung nach Anspruch 2 oder 4, **dadurch gekennzeichnet, dass** die Eingangsdaten des Schätzers (15) außerdem die Konzentrationen ($C_{gemessen}$) der Gase am Reformerausgang (3), gemessen von einem Konzentrationssensor, und die Gasgehalte am Ausgang des Reformers (3) aufweisen, die vom Schätzer (15) geschätzt werden.

6. Vorrichtung nach Anspruch 4, **dadurch gekennzeichnet, dass** die Eingangsdaten des Schätzers (15) außerdem die Temperatur ($T_{OUT}$) der Gase am Reformerausgang (3), gemessen von einem Temperatursensor, und die Ausgangstemperatur ($T^{OUT}$) der Gase des Reformers (3), geschätzt vom Schätzer (15), aufweisen.

7. Verfahren zur Steuerung von Luft-, Wasserdampf- und Kraftstoffmengen, die in einen Reformer (3) eines an Bord eines Kraftfahrzeugs (1) befindlichen Brennstoffzellensystems eingespritzt werden, **dadurch gekennzeichnet, dass** Gasgehalte am Ausgang des Reformers (3) ausgehend von Eingangsdaten geschätzt werden, die die Luft-Zulaufmenge ($Q_{Luft}$), die Wasserdampf-Zulaufmenge ($Q_{Wasser}$), die Kraftstoff-Zulaufmenge ($Q_{Kraft}$) und die Eingangstemperatur ($T_{IN}$) der Gase des Reformers (3) umfassen, und in den Reformer (3) eingespritzte Luft-, Wasserdampf- und Kraftstoffmengen in Abhängigkeit von den geschätzten Gasgehalten gesteuert werden.

8. Verfahren nach Anspruch 7, **dadurch gekennzeichnet, dass** außerdem Ausgangsdaten des Schätzers (15) als Eingangsdaten des Schätzers (15) verwendet werden.

9. Verfahren nach Anspruch 8, **dadurch gekennzeichnet, dass** außerdem von einem Sensor am Eingang des Schätzers (15) gemessene Daten verwendet werden, die den geschätzten Ausgangsdaten entsprechen, die als Eingangsdatenwert verwendet werden.

## FIG.1

## FIG.2

# FIG.3

15

$Q_{Carb}$
46

$Q_{Air}$
47

$Q_{Eau}$
48

$T_{IN}$
49

$P$
50

$n^P_{CO_2}, n^P_{H_2}, n^P_{CO}, n^P_{O_2}, n^P_{H_2O}$
51

$T^{OUT}$
52

# FIG.4

15

$Q_{Carb}$
46

$Q_{Air}$
47

$Q_{Eau}$
48

$T_{IN}$
49

$C_{mesurée}$
53

$n^P_{CO_2}, n^P_{H_2}, n^P_{CO}, n^P_{O_2}, n^P_{H_2O}$
51

$T^{OUT}$
52

54

# FIG.5

15

$Q_{Carb}$

46

$Q_{Air}$

47

$Q_{Eau}$

48

$T_{IN}$

49

$T_{OUT}$

55

$n_{CO_2}^P, n_{H_2}^P, n_{CO}^P, n_{O_2}^P, n_{H_2O}^P$

51

$T^{OUT}$

52

56

## FIG.6

Gaz participant à la dilution

Taux de CO désiré

Débit d'hydrogène désiré Q$_{H_2}$

Optimisation consommation et taux de CO — 60

Commande injection air, vapeur d'eau et carburant — 16

WGS

PrOx

Vers pile à combustible

Commande injection eau et air — 68

Taux de CO désiré — 70

Q$_{Carb}$, Q$_{Air}$, Q$_{Eau}$

C$_{mesurée}$

T$_{IN}$

EP 1 645 541 B1